(19) Europäisches Patentamt
European Patent Office
Office européen des brevets

(11) EP 4 760 646 A1

(12) EUROPEAN PATENT APPLICATION

(43) Date of publication:
17.06.2026 Bulletin 2026/25

(21) Application number: 24219987.5

(22) Date of filing: 13.12.2024

(51) International Patent Classification (IPC):
G06V 10/25 (2022.01)    G06V 20/52 (2022.01)
G06V 20/64 (2022.01)

(52) Cooperative Patent Classification (CPC):
G06V 20/52; G06V 10/25; G06V 20/647

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Cubox Co., Ltd.
Seoul, 06236 (KR)

(72) Inventors:
• CHUN, Ki Cheol
  05118 Seoul (KR)
• LEE, Gihun
  16538 Gyeonggi-do (KR)
• SHIN, Kwang Chul
  22025 Incheon (KR)
• NAM, Un Sung
  04311 Seoul (KR)

(74) Representative: Ostertag & Partner Patentanwälte mbB
Azenbergstraße 35
70174 Stuttgart (DE)

Remarks:
Amended claims in accordance with Rule 137(2) EPC.

(54) THREE-DIMENSIONAL OBJECT DETECTION METHOD AND THREE-DIMENSIONAL OBJECT DETECTION DEVICE

(57) Proposed are a three-dimensional (3D) object detection method and a 3D object detection device. The device includes a sensor configured to capture a plurality of two-dimensional (2D) images related to an external object, and a processor configured to detect the external object on the basis of the plurality of 2D images, to generate a plurality of 2D bounding boxes related to the external object, and to obtain a plurality of 3D bounding boxes related to the external object on the basis of the plurality of 2D bounding boxes. Furthermore, the device includes a display configured to display a final 3D bounding box among the plurality of 3D bounding boxes to outside.

FIG. 1

OBJECT DETECTION METHOD (S100)

CAPTURE PLURALITY OF IMAGES OF EXTERNAL OBJECT BY USING PLURALITY OF CAMERAS — S110

DETECT SINGLE OBJECT IN PLURALITY OF IMAGES — S120

OBTAIN 2D BOUNDING BOXES RELATED TO OBJECT — S130

PERFORM 3D VOXELIZATION ON OBJECT ON BASIS OF 2D BOUNDING BOXES RELATED TO OBJECT — S140

GENERATE 3D BOUNDING BOXES RELATED TO OBJECT BY USING 3D VOXELS RELATED TO OBJECT — S150

REMOVE 3D BOUNDING BOX HAVING FALSE POSITIVE VALUE AMONG 3D BOUNDING BOXES OBTAINED BY CAPTURING IMAGES AT LEAST REFERENCE NUMBER OF TIMES — S151

VISUALIZE AND DISPLAY 3D BOUNDING BOX ON 3D VOXEL SPACE OF ENTIRE SCENE — S160

EP 4 760 646 A1

**Description**

BACKGROUND

Technical Field

The present disclosure relates to a three-dimensional (3D) object detection method and device using a multi-view image captured by using an X-ray Computed Tomography (CT) device.

Description of the Related Art

3D reconstruction technology is utilized in various fields such as the medical imaging field, the X-ray object detection field, the autonomous driving and robotics field, the gaming and Virtual Reality (VR)/Augmented Reality (AR) field, the architecture and urban planning field, the film and visual effects (VFX) field, and so on.

Particularly, baggage (object) detection technology using X-rays has been driving significant innovations. Through this, the accuracy and efficiency of a security check in airports, ports, and so on are significantly improved.

However, when a conventional X-ray device for baggage detection is used, information related to baggage is provided as a two-dimensional (2D) image, but there is a limit to accurately identifying the shape and position of the object only by the 2D image.

SUMMARY

Accordingly, the present disclosure has been made keeping in mind the above problems occurring in the related art, and an objective of the present disclosure is to provide a three-dimensional (3D) object detection method and a 3D object detection device, the method and device being configured to reconstruct a 3D bounding box related to baggage (object) through a relatively small number of 2D multi-view images captured by an X-ray Computed Tomography (CT) device for baggage (object) detection.

In addition, another objective of the present disclosure is to provide a 3D object detection method and a 3D object detection device, the method and device being configured to obtain a 2D bounding box of an object through 2D images captured by an X-ray multi source in which a geometry calibration is performed, and the method and device being configured to use the 2D bounding box to reconstruct a 3D bounding box of the object in a visual hull method of a conventional technology.

According to an embodiment of the present disclosure, there is provided a 3D object detection device including: a sensor configured to capture a plurality of 2D images related to an external object; a processor configured to detect the external object on the basis of the plurality of 2D images, to generate a plurality of 2D bounding boxes related to the external object, and to obtain a plurality of 3D bounding boxes related to the external object on the basis of the plurality of 2D bounding boxes; and a display configured to display a final 3D bounding box among the plurality of 3D bounding boxes to outside.

In addition, the processor may be configured to obtain the final 3D bounding box by removing the 3D bounding boxes with false positive values from the plurality of 3D bounding boxes.

In addition, the processor may be configured to project each of the plurality of the 3D bounding boxes such that a plurality of 2D bounding boxes is provided, may be configured to compare the projected plurality of 2D bounding boxes with the pre-generated plurality of 2D bounding boxes, may be configured to select a final 2D bounding box with the smallest error with respect to the pre-generated plurality of 2D bounding boxes, and may be configured to generate the final 3D bounding box by using the final 2D bounding box.

In addition, the sensor may include a plurality of cameras configured to capture the plurality of 2D images by an X-ray imaging method.

In addition, each of the plurality of cameras may be configured to capture the plurality of 2D images while each of the plurality of cameras is in a state in which a geometrical calibration is performed on each of the plurality of cameras.

In addition, the processor may be configured to generate the plurality of 3D bounding boxes from each of the plurality of 2D bounding boxes on the basis of calibration information related to the plurality of cameras.

In addition, each of the plurality of cameras may be configured to capture the plurality of 2D images by using various types of imaging methods such as a cone-type imaging method, a fanbeam-type imaging method, and so on.

In addition, the processor may be configured to set each width value of the plurality of 2D bounding boxes to each z-axis value of each of the plurality of 3D bounding boxes.

According to another embodiment of the present disclosure, there is provided a 3D object detection method by using a 3D object detection device, the 3D object detection method including: capturing a plurality of 2D images related to an external object; detecting the external object on the basis of the plurality of 2D images; generating a plurality of 2D bounding boxes related to the external object; obtaining a plurality of 3D bounding boxes related to the external object on the basis of the plurality of 2D bounding boxes; and displaying a final 3D bounding box among the plurality of 3D bounding boxes to outside.

In addition, the 3D object detection method may further include obtaining the final 3D bounding box by removing the 3D bounding boxes with false positive values from the plurality of 3D bounding boxes.

In addition, the 3D object detection method may further include: projecting each of the plurality of the 3D bounding boxes such that a plurality of 2D bounding boxes is provided; comparing the projected plurality of 2D bounding boxes with the pre-generated plurality of 2D bounding boxes; selecting a final 2D bounding box with the smallest error with respect to the pre-generated plurality of 2D bounding boxes; and generating the final 3D bounding box by using the final 2D bounding box.

In addition, the 3D object detection method may further include capturing, by a plurality of cameras included in the 3D object detection device, the plurality of 2D images by an X-ray imaging method.

In addition, the 3D object detection method may further include capturing the plurality of 2D images while the plurality of cameras is in a state in which a geometrical calibration is performed on the plurality of cameras.

In addition, the 3D object detection method may further include generating the plurality of 3D bounding boxes from each of the plurality of 2D bounding boxes on the basis of calibration information related to the plurality of cameras.

In addition, the 3D object detection method may further include capturing the plurality of 2D images by using various types of imaging methods such as a cone-type imaging method, a fanbeam-type imaging method, and so on.

In addition, the 3D object detection method may further include setting each width value of the plurality of 2D bounding boxes to each z-axis value of each of the plurality of 3D bounding boxes.

According to the present disclosure, a 3D bounding region of an object is capable of being easily reconstructed from a plurality of images captured by a plurality of geometrically calibrated X-ray devices (sources).

In addition, according to the present disclosure, a bounding box position of a 3D object is capable of being easily detected by using only a relatively small number of X-ray sources obtained by a stationary gantry CT imaging method.

In addition, according to the present disclosure, unlike a conventional rotating gantry CT method in which a camera is rotated while an object is stopped and numerous images are obtained, the stationary gantry CT imaging method is used, so that the object is not required to be stopped, thereby being capable of reducing the imaging time.

In addition, according to the present disclosure, after the voxelization of the z-axis value of the 3D bounding box is performed only on the xy plane voxel in the visual hull method, the z-axis value of the 3D bounding box is capable of being obtained by using calibration information of the width (z-axis) of the 2D bounding box detected in the 2D image, so that the reconstruction operation for the 3D bounding box is capable of being rapidly performed.

BRIEF DESCRIPTION OF THE DRAWINGS

The above and other objectives, features, and other advantages of the present disclosure will be more clearly understood from the following detailed description when taken in conjunction with the accompanying drawings, in which:

FIG. 1 is a flowchart showing a three-dimensional (3D) object detection method according to an embodiment of the present disclosure;

FIG. 2 is a block diagram illustrating a configuration of an object detection device according to an embodiment of the present disclosure;

FIG. 3 is a view illustrating an example of an image capturing method according to an embodiment of the present disclosure;

FIG. 4A to FIG. 4C are views illustrating a two-dimensional (2D) bounding box detection process according to an embodiment of the present disclosure;

FIG. 5 and FIG. 6 are views illustrating a process in which the object detection device performs a 3D voxelization on an object according to an embodiment of the present disclosure;

FIG. 7A to FIG. 8 are views illustrating a 3D bounding box restored through an embodiment of the present disclosure; and

FIG. 9 is a view illustrating a process in which the object detection device visualizes a 3D bounding box according to an embodiment of the present disclosure.

DETAILED DESCRIPTION

[Description of Terms in the Present Disclosure]

All of the embodiments described below are set forth for illustrative purposes as aids for better understanding the present disclosure and may be practiced in various forms different from the embodiments described herein. In addition, in describing the present disclosure, detailed explanations of relevant functions or components that are publicly known are omitted, if it is deemed that such detailed explanations may unnecessarily obscure the essence of the present disclosure.

The accompanying drawings, provided to aid the understanding of the present disclosure, are not necessarily to scale but rather have certain components illustrated in an exaggerated form. In assigning reference numerals to the components, the same numerals are assigned to the same components as much as possible, even when the components are shown in different drawings.

In addition, in describing the components of the embodiments of the present disclosure, terms such as first, second, A, B, (a), (b), and so on may be used. These terms are only for distinguishing the component from other components, and are not limited to the essence, order, or sequence of the component by the terms. When a component is described as being, for example, "connected", "coupled", or "joined" to another component, the component may be connected, coupled, or joined directly to the other component, but it shall be appreciated that another component may be "connected", "coupled", or "joined" between the component and the other component.

Therefore, the embodiments described in this specification and the configurations illustrated in the drawings represent the most preferred embodiments of the present disclosure, not the entire technical idea of the present disclosure, and as such, it shall be appreciated that there may be various permutation to the described embodiments of the present disclosure.

Any terms or words used in the present specification and the appended claims shall not be limited to their common or dictionary meanings but rather shall be interpreted to the meanings and concepts that are in agreement with the technical idea of the present disclosure on the basis of the principle that the inventor may suitably define the concept of a term to describe the present disclosure in the best possible way.

Moreover, in the present disclosure, any expression in the singular form shall also encompass the meaning of the plural form, unless explicitly described otherwise.

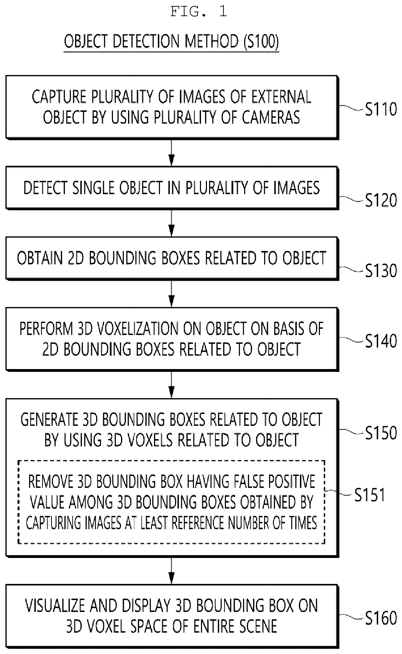

**[Three-Dimensional Object Detection Method: FIG. 1]**

FIG. 1 is a flowchart showing a three-dimensional (3D) object detection method according to an embodiment of the present disclosure.

As illustrated in FIG. 1, a 3D object detection method S100 includes a S110 process, a S120 process, a S130 process, a S140 process, a S150 process, a S151 process, and a S160 process, and a detailed description thereof is as follows.

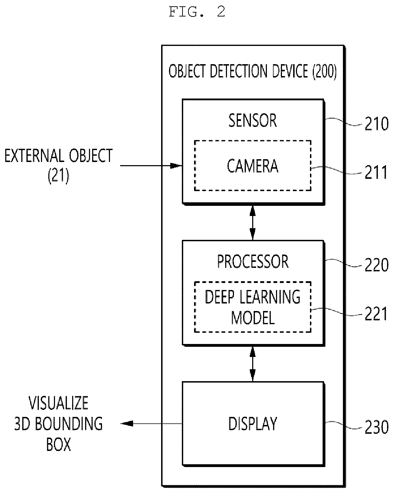

First, an object detection device according to an embodiment of the present disclosure (described later with reference to FIG. 2) captures a plurality of images of an external object by using a plurality of cameras (S110). Here, the object detection device may capture an image on the basis of a fanbeam-type X-ray imaging method. Here, the object detection device may capture an image of an object line by line. Here, the object may include a dangerous item (i.e., a gun, a knife, a pair of scissors, or various types of dangerous items). Here, the imaging method may include various types of imaging methods such as a cone-type imaging method as well as the fanbeam-type imaging method, and it is not necessary to be limited thereto.

Subsequently, the object detection device detects a single object within a plurality of images (S120). Here, the object detection device may detect the object by using a deep learning algorithm in the image.

Then, the object detection device obtains two-dimensional (2D) bounding boxes related to the object (S130). Here, the object detection device may obtain the 2D bounding boxes related to the object by using the deep learning algorithm described above.

Subsequently, the object detection device performs a 3D voxelization on the object on the basis of the 2D bounding boxes obtained with respect to the object (S140). Here, the object detection device may perform the 3D voxelization on the object by using a known visual hull algorithm. For example, the object detection device may perform the 3D voxelization through the visual hull algorithm on the basis of the 2D bounding boxes detected in the plurality of images and calibration information of each of the cameras.

Then, the object detection device generates 3D bounding boxes related to the object by using 3D voxels related to the object (S150).

In addition, the object detection device may capture images at least a reference number of times, and may remove outliers among the 3D bounding boxes obtained on the basis of the images. Here, the object detection device may restore the 3D bounding box by retaining only the voxels that fall within all the 2D bounding boxes when each of the 2D bounding boxes is projected onto the 3D voxels.

Subsequently, the object detection device visualizes and displays the 3D bounding box on a 3D voxel space of the entire scene (S160).

**[Three-Dimensional Object Detection Device: FIG. 2]**

FIG. 2 is a block diagram illustrating a configuration of an object detection device according to an embodiment of the present disclosure.

As illustrated in FIG. 2, an object detection device 200 according to an embodiment of the present disclosure may include a sensor 210, a processor 220, and a display 230.

The sensor 210 may include a camera 211 for capturing and obtaining a 2D image of an external object 21. Here, the sensor may include a plurality of cameras.

The processor 220 may detect an object in an 2D image by using the 2D image captured by the camera. The processor 220 may generate a 2D bounding box related to a detected object. The processor 220 may perform the 3D voxelization on the object by using the 2D bounding box related to the object, and may generate a 3D bounding box related to the object by using 3D voxels. Here, the processor 220 may detect an object in a 2D image by using a deep learning model 221 embedded in the processor 220, and may generate a 2D bounding box related to the detected object.

The display 230 may visualize a 3D bounding box by displaying the 3D bounding box to the outside according to a control of the processor 220.

In addition, parameters related to each operation of each of the plurality of cameras may be set as an internal parameter K and external parameters [R|T] by using following Equation 1, Equation 2, and Equation 3 below, wherein the internal parameter K includes a Detector to Source Distance (DSD) and a unit conversion value s and the external parameters [RIT] have a three-axis degree of freedom for rotation along x, y, and z axes.

【Equation 1】

$$
K = \begin{bmatrix} DSD/s & 0 & C_x \\ 0 & DSD/s & C_y \\ 0 & 0 & 1 \end{bmatrix}
$$

【Equation 2】

$$
R = \begin{bmatrix} \cos\theta_y \cos\theta_z & \cos\theta_z \sin\theta_x \sin\theta_y - \cos\theta_x \sin\theta_z & \sin\theta_x \sin\theta_z + \cos\theta_x \cos\theta_z \sin\theta_y \\ \cos\theta_y \sin\theta_z & \cos\theta_x \cos\theta_z + \sin\theta_x \sin\theta_y \sin\theta_z & \cos\theta_x \sin\theta_y \sin\theta_z - \cos\theta_z \sin\theta_x \\ -\sin\theta_y & \cos\theta_y \sin\theta_x & \cos\theta_x \cos\theta_y \end{bmatrix}
$$

【Equation 3】

$$
T = -R \cdot C_{world}
$$

In addition, after each parameter of the plurality of cameras is set, the processor may project a specific point p3d in 3D space onto a specific point p2d in 2D space by using following Equation 4 and Equation 5 below.

【Equation 4】

$$
p_{2d} = \mathbf{K} \cdot (\mathbf{R} \cdot p_{3d} + \mathbf{T})
$$

【Equation 5】

$$
p_{2d} = \frac{p_{2d}}{p_{2d}[2]}
$$

In addition, the processor only uses a height value of the image in order to use the visual hull on the xy plane of the voxels restored in three dimensions. Since the values of the xy plane on the voxels have values (X, Y, 0, 1) in a homogenous coordinate system, the processor may calculate the 2D coordinate from the 3D coordinate of the specific point by using the following Equation 6, Equation 7, and Equation 8 below by using a camera matrix P obtained by using the internal parameter and the external parameters.

【Equation 6】

$$\begin{bmatrix} u \\ v \\ 1 \end{bmatrix} = \begin{bmatrix} P_{11} & P_{12} & P_{13} & P_{14} \\ P_{21} & P_{22} & P_{23} & P_{24} \\ P_{31} & P_{32} & P_{33} & P_{34} \end{bmatrix} \begin{bmatrix} X \\ Y \\ Z \\ 1 \end{bmatrix}$$

【Equation 7】

$$u = \frac{p_{11}x + p_{12}y + p_{13}z + p_{14}}{p_{31}x + p_{32}y + p_{33}z + p_{34}}$$

$$v = \frac{p_{21}x + p_{22}y + p_{23}z + p_{24}}{p_{31}x + p_{32}y + p_{33}z + p_{34}}$$

$$w = p_{31}x + p_{32}y + p_{33}z + p_{34}$$

【Equation 8】

$$v = \frac{p_{21}x + p_{22}y + p_{23}z + p_{24}}{p_{31}x + p_{32}y + p_{33}z + p_{34}}$$

The processor may perform a visual hull process to extract a region that satisfies a condition across all images. The visual hull process is performed by carving the xy plane voxels on the basis of whether a v value of the calculated 2D image coordinates (u, v) falls within the detected region of the 2D image, as defined by the corresponding condition ((v > 2d bbox_left_top_y) and (v < 2d bbox_right_bottom_y)).

However, in an embodiment of the present disclosure, the fanbeam-type imaging method is described so as to facilitate a simple derivation of equations and intuitive understanding. Here, a width value of the image is not affected by perspective, and the rotation degree of freedom of the camera has one-axis degree of freedom with respect to the Z-axis. When the fanbeam-type imaging method is performed, the processor may calculate the camera parameters by using following Equation 9, Equation 10, and Equation 11 below.

【Equation 9】

$$K = \begin{bmatrix} \frac{1}{s} & 0 & C_x \\ 0 & \frac{DSD}{s} & C_y \\ 0 & 0 & 1 \end{bmatrix}$$

【Equation 10】

$$R_z = \begin{bmatrix} \cos\theta_z & -\sin\theta_z & 0 \\ \sin\theta_z & \cos\theta_z & 0 \\ 0 & 0 & 1 \end{bmatrix}$$

【Equation 11】

$$T = -R \cdot C_{world}$$

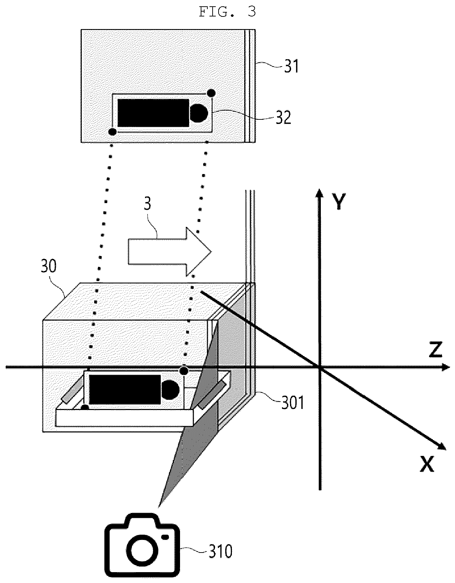

[Fanbeam-Type Imaging Method: FIG. 3]

FIG. 3 is a view illustrating an example of an image capturing method according to an embodiment of the present disclosure.

As illustrated in FIG. 3, according to an embodiment of the present disclosure, while baggage 30 containing an object is moved along a z-axis direction 3, a camera 310 may capture the object and may obtain 2D images 31.

Here, the camera 310 may capture the 2D images 31 by using the fanbeam-type imaging method. That is, the camera 310 may capture the baggage 30 line by line.

Here, the camera 310 may capture 2D images by using an X-ray CT imaging method.

Subsequently, the processor (the processor 220 in FIG. 2) may obtain 2D bounding boxes 32 related to the object by using the 2D images.

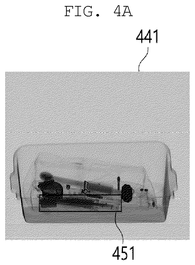

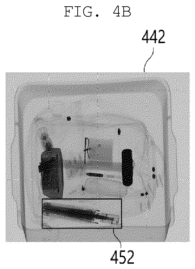

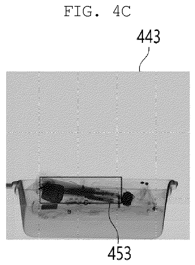

**[Two-Dimensional Bounding Box Detection: FIG. 4]**

FIG. 4A to FIG. 4C are views illustrating a 2D bounding box detection process according to an embodiment of the present disclosure.

As illustrated in FIG. 4A, FIG. 4B, and FIG. 4C, the object detection device may capture 2D images 441, 442, and 443 related to an object. Specifically, the object detection device may capture the plurality of images 441, 442, and 443 related to the object at a plurality of angles through a plurality of cameras positioned at different locations.

The object detection device may detect a specific object 451, 452, or 453 contained in the 2D images 441, 442, and 443.

Here, the processor of the object detection device may detect a specific object in 2D images by using the deep learning model embedded in the processor.

In addition, the processor of the object detection device may detect and obtain 2D bounding boxes 451, 452, and 453 in each image related to a specific object by using the deep learning model embedded in the processor.

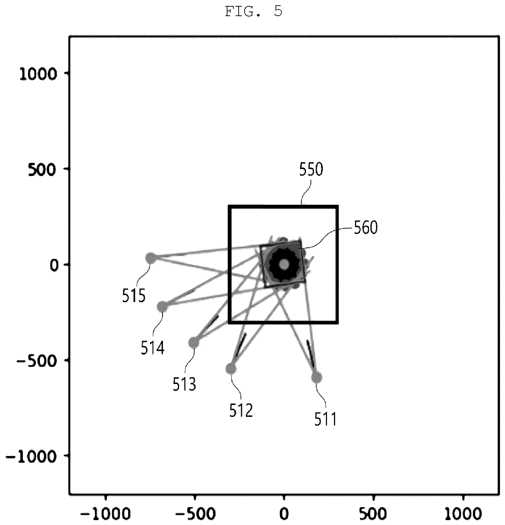

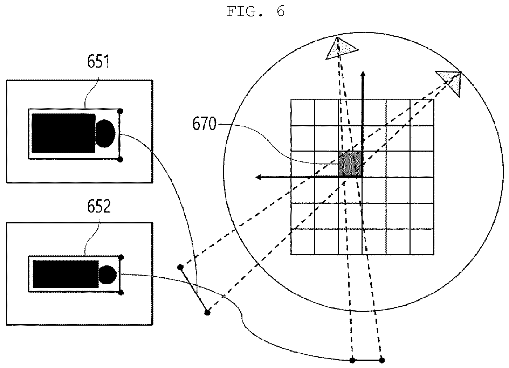

**[Voxelization Process: FIG. 5 and FIG. 6]**

FIG. 5 and FIG. 6 are views illustrating a process in which the object detection device performs a 3D voxelization on an object according to an embodiment of the present disclosure.

As illustrated in FIG. 5, the object detection device may perform the 3D voxelization on an object by using the visual hull algorithm on an xy voxel plane.

Here, the object detection device obtains 2D bounding boxes on the basis of 2D images captured by a plurality of cameras 511, 512, 513, 514, and 515 positioned at different locations, and obtains 3D xy plane voxels 560 carved from an initial xy plane voxels 550 through the visual hull algorithm.

For example, the object detection device may restore voxels containing the corresponding object by using the visual hull algorithm for calibration information on each of the cameras 511, 512, 513, 514, and 515 and the 2D bounding boxes of the detected object.

Here, in order to secure a physical meaning or a scale matching, it is assumed that one pixel value of a 2D image has the same unit as a one voxel value of a 3D voxel space.

As illustrated in FIG. 6, the object detection device may obtain 3D voxel values 670 by projecting 2D bounding boxes 651 and 652 onto 3D xy plane voxels.

Specifically, the object detection device retains voxels falls within all of the 2D bounding boxes when each of the 2D bounding boxes is projected onto the 3D xy plane voxels, thereby being capable of obtaining the 3D voxels related to the object and being capable of generating and restoring a 3D bounding box by using the 3D voxels.

In an embodiment of the present disclosure, when the object detection device capture an object in the fanbeam-type imaging method, the 3D object detection device set a width value of the 2D bounding box to a value equal to a z-axis value (a z-axis length in FIG. 3) of the restored 3D bounding box. Therefore, the object detection device may obtain the z-axis length of the 3D bounding box by using the width value of the 2D bounding box.

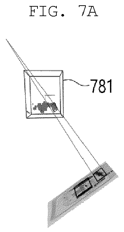

**[Three-Dimensional Bounding Box Restoration: FIG. 7A to FIG. 8]**

FIG. 7A to FIG. 8 are views illustrating a 3D bounding box restored through an embodiment of the present disclosure.

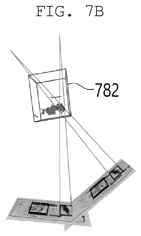

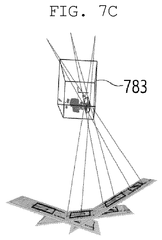

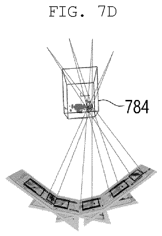

As illustrated in FIG. 7A, FIG. 7B, FIG. 7C, and FIG. 7D, the object detection device may display and visualize 3D bounding boxes 781, 782, 783, and 784 through the display, the 3D bounding boxes 781, 782, 783, and 784 being restored and obtained.

As illustrated in FIG. 7A, FIG. 7B, FIG. 7C, and FIG. 7D, as the number of cameras or the number of images captured by the cameras increases or decreases, the 3D bounding boxes may be restored.

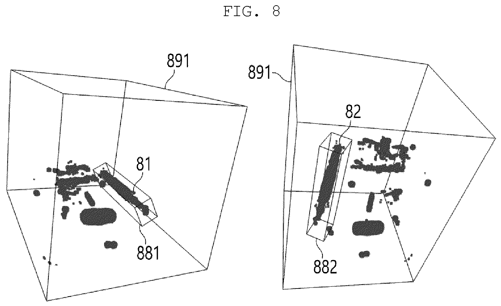

As illustrated in FIG. 8, the object detection device may obtain 2D bounding boxes 881 and 882 for objects 81 and 82 included in 2D images taken in various angles, and may obtain 3D bounding boxes 891 and 892 on the basis of the 2D bounding boxes.

Here, in order to visualize the 3D bounding boxes, the object detection device may separately store 3D voxel files (raw files) of the entire of the 2D images, and may visualize the 3D bounding box on the basis of the stored 3D voxel files.

**[Removal of False Positive Value]**

The generated 3D bounding boxes as described above may contain incorrect information due to the simultaneous detection of various objects within images or due to a false positive value caused by the deep learning algorithm confusing other objects.

Therefore, the object detection device may reproject the restored 3D bounding boxes (the 3D voxels) onto the 2D space on the xy plane by using a geometric relationship between 3D space and 2D space, and may select only the 2D bounding box that has a minimum error with the previously obtained 2D bounding box, thereby being capable of removing the false positive values.

Subsequently, the object detection device may restore and obtain the final 3D bounding box by using the reprojected 2D bounding box.

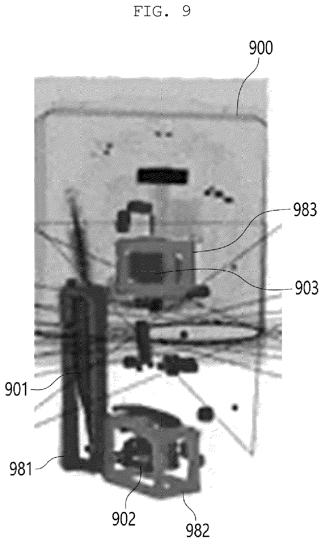

**[Visualization of the Three-Dimensional Bounding Box: FIG. 9]**

FIG. 9 is a view illustrating a process in which the object detection device visualizes a 3D bounding box according to an embodiment of the present disclosure.

As illustrated in FIG. 9, the object detection device may visualize and display finally restored 3D bounding boxes 982, 981, and 983 in a 2D image 900 captured by the camera.

**[Interpretation of the Present Disclosure]**

While the embodiments of the present disclosure have been described above with reference to the accompanying drawings, the present disclosure is not limited to the disclosed embodiments and the accompanying drawings, and those skilled in the art may variously modify the present disclosure without departing from the technical ideas of the present disclosure.

As described above, the embodiments and the accompanying drawings disclosed in the present disclosure are provided for describing the present disclosure and are not intended to limit the technical ideas of the present disclosure. The technical ideas of the present disclosure are not limited to the embodiments and the drawings. Therefore, it should be understood that the embodiments described above are illustrative in all aspects and not restrictive. The scope of the present disclosure should be construed as being covered by the scope of the appended claims, and all technical ideas falling within the scope of the claims should be construed as being included in the scope of the present disclosure.

**Claims**

1. A three-dimensional (3D) object detection device comprising:

a sensor configured to capture a plurality of two-dimensional (2D) images related to an external object;
a processor configured to detect the external object on the basis of the plurality of 2D images, to generate a plurality of 2D bounding boxes related to the external object, and to obtain a plurality of 3D bounding boxes related to the external object on the basis of the plurality of 2D bounding boxes; and
a display configured to display a final 3D bounding box among the plurality of 3D bounding boxes to outside.

2. The 3D object detection device of claim 1, wherein the processor is configured to obtain the final 3D bounding box by removing the 3D bounding boxes with false positive values from the plurality of 3D bounding boxes.

3. The 3D object detection device of claim 2, wherein the processor is configured to project each of the plurality of the 3D bounding boxes such that a plurality of 2D bounding boxes is provided, is configured to compare the projected plurality of 2D bounding boxes with the pre-generated plurality of 2D bounding boxes, is configured to select a final 2D bounding box with the smallest error with respect to the pre-generated plurality of 2D bounding boxes, and is configured to generate the final 3D bounding box by using the final 2D bounding box.

4. The 3D object detection device of claim 1, wherein the sensor comprises a plurality of cameras configured to capture the plurality of 2D images by an X-ray imaging method.

5. The 3D object detection device of claim 4, wherein each of the plurality of cameras is configured to capture the plurality of 2D images while each of the plurality of cameras is in a state in which a geometrical calibration is performed on each of the plurality of cameras.

6. The 3D object detection device of claim 5, wherein the processor is configured to generate the plurality of 3D bounding boxes from each of the plurality of 2D bounding boxes on the basis of calibration information related to the plurality of cameras.

7. The 3D object detection device of claim 4, wherein each of the plurality of cameras is configured to capture the plurality of 2D images by using a fanbeam-type imaging method.

8. The 3D object detection device of claim 7, wherein the processor is configured to set each width value of the plurality of 2D bounding boxes to each z-axis value of each of the plurality of 3D bounding boxes.

9. A 3D object detection method by using a 3D object detection device, the 3D object detection method comprising:

capturing a plurality of 2D images related to an external object;
detecting the external object on the basis of the plurality of 2D images;
generating a plurality of 2D bounding boxes related to the external object;
obtaining a plurality of 3D bounding boxes related to the external object on the basis of the plurality of 2D bounding boxes; and
displaying a final 3D bounding box among the plurality of 3D bounding boxes to outside.

10. The 3D object detection method of claim 9, further comprising:
obtaining the final 3D bounding box by removing the 3D bounding boxes with false positive values from the plurality of 3D bounding boxes.

11. The 3D object detection method of claim 10, further comprising:

projecting each of the plurality of the 3D bounding boxes such that a plurality of 2D bounding boxes is provided;
comparing the projected plurality of 2D bounding boxes with the pre-generated plurality of 2D bounding boxes;
selecting a final 2D bounding box with the smallest error with respect to the pre-generated plurality of 2D bounding boxes; and
generating the final 3D bounding box by using the final 2D bounding box.

12. The 3D object detection method of claim 9, further comprising:
capturing, by a plurality of cameras included in the 3D object detection device, the plurality of 2D images by an X-ray imaging method.

13. The 3D object detection method of claim 12, further comprising:

capturing the plurality of 2D images while the plurality of cameras is in a state in which a geometrical calibration is performed on the plurality of cameras.

14. The 3D object detection method of claim 13, further comprising:
generating the plurality of 3D bounding boxes from each of the plurality of 2D bounding boxes on the basis of calibration information related to the plurality of cameras.

15. The 3D object detection method of claim 12, further comprising:
capturing the plurality of 2D images by using a fanbeam-type imaging method.

16. The 3D object detection method of claim 15, further comprising:
setting each width value of the plurality of 2D bounding boxes to each z-axis value of each of the plurality of 3D bounding boxes.

**Amended claims in accordance with Rule 137(2) EPC.**

1. A three-dimensional (3D) object detection device comprising:

a sensor configured to capture a plurality of two-dimensional (2D) images related to an external object;
a processor configured to detect the external object on the basis of the plurality of 2D images, to generate a plurality of 2D bounding boxes related to the external object, and to obtain a plurality of 3D bounding boxes related to the external object on the basis of the plurality of 2D bounding boxes; and
a display configured to display a final 3D bounding box among the plurality of 3D bounding boxes to outside
wherein the sensor comprises a plurality of cameras configured to capture the plurality of 2D images by an X-ray imaging method
wherein each of the plurality of cameras is configured to capture the plurality of 2D images by using a fanbeam-type imaging method
wherein the processor is configured to set each width value of the plurality of 2D bounding boxes to each z-axis value of each of the plurality of 3D bounding boxes.

2. The 3D object detection device of claim 1, wherein the processor is configured to obtain the final 3D bounding box by removing the 3D bounding boxes with false positive values from the plurality of 3D bounding boxes
wherein the processor is configured to project each of the plurality of the 3D bounding boxes such that a plurality of 2D bounding boxes is provided, is configured to compare the projected plurality of 2D bounding boxes with the pre-generated plurality of 2D bounding boxes, is configured to select a final 2D bounding box with the smallest error with respect to the pre-generated plurality of 2D bounding boxes, and is configured to generate the final 3D bounding box by using the final 2D bounding box.

3. The 3D object detection device of claim **1,** wherein each of the plurality of cameras is configured to capture the plurality of 2D images while each of the plurality of cameras is in a state in which a geometrical calibration is performed on each of the plurality of cameras.

4. The 3D object detection device of claim 5, wherein the processor is configured to generate the plurality of 3D bounding boxes from each of the plurality of 2D bounding boxes on the basis of calibration information related to the plurality of cameras.

5. A 3D object detection method by using a 3D object detection device, the 3D object detection method comprising:

capturing a plurality of 2D images related to an external object;
detecting the external object on the basis of the plurality of 2D images;
generating a plurality of 2D bounding boxes related to the external object;
obtaining a plurality of 3D bounding boxes related to the external object on the basis of the plurality of 2D bounding boxes; and
displaying a final 3D bounding box among the plurality of 3D bounding boxes to outside
capturing, by a plurality of cameras included in the 3D object detection device, the plurality of 2D images by an X-ray imaging method
capturing the plurality of 2D images by using a fanbeam-type imaging method
setting each width value of the plurality of 2D bounding boxes to each z-axis value of each of the plurality of 3D bounding boxes.

6. The 3D object detection method of claim 9, further comprising:

obtaining the final 3D bounding box by removing the 3D bounding boxes with false positive values from the plurality of 3D bounding boxes
projecting each of the plurality of the 3D bounding boxes such that a plurality of 2D bounding boxes is provided;
comparing the projected plurality of 2D bounding boxes with the pre-generated plurality of 2D bounding boxes;
selecting a final 2D bounding box with the smallest error with respect to the pre-generated plurality of 2D bounding boxes; and
generating the final 3D bounding box by using the final 2D bounding box

7. The 3D object detection method of claim 9, further comprising:
capturing the plurality of 2D images while the plurality of cameras is in a state in which a geometrical calibration is performed on the plurality of cameras.

8. The 3D object detection method of claim 13, further comprising:
generating the plurality of 3D bounding boxes from each of the plurality of 2D bounding boxes on the basis of calibration information related to the plurality of cameras.

FIG. 1

OBJECT DETECTION METHOD (S100)

CAPTURE PLURALITY OF IMAGES OF EXTERNAL
OBJECT BY USING PLURALITY OF CAMERAS — S110

↓

DETECT SINGLE OBJECT IN PLURALITY OF IMAGES — S120

↓

OBTAIN 2D BOUNDING BOXES RELATED TO OBJECT — S130

↓

PERFORM 3D VOXELIZATION ON OBJECT ON BASIS OF
2D BOUNDING BOXES RELATED TO OBJECT — S140

↓

GENERATE 3D BOUNDING BOXES RELATED TO OBJECT
BY USING 3D VOXELS RELATED TO OBJECT — S150

REMOVE 3D BOUNDING BOX HAVING FALSE POSITIVE
VALUE AMONG 3D BOUNDING BOXES OBTAINED BY
CAPTURING IMAGES AT LEAST REFERENCE NUMBER OF TIMES — S151

↓

VISUALIZE AND DISPLAY 3D BOUNDING BOX ON
3D VOXEL SPACE OF ENTIRE SCENE — S160

FIG. 2

EXTERNAL OBJECT
(21) →

**OBJECT DETECTION DEVICE (200)**

SENSOR — 210

CAMERA — 211

PROCESSOR — 220

DEEP LEARNING MODEL — 221

VISUALIZE
3D BOUNDING ← DISPLAY — 230
BOX

FIG. 3

FIG. 4A

441

451

FIG. 4B

442

452

FIG. 4C

FIG. 5

FIG. 6

FIG. 7A

781

FIG. 7B

782

FIG. 7C

—783

FIG. 7D

—784

FIG. 8

FIG. 9

**EUROPEAN SEARCH REPORT**

Application Number

EP 24 21 9987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/112238 A1 (BYLICKA BOGNA [PL] ET AL) 15 April 2021 (2021-04-15) | 1-3,9-11 | INV. G06V10/25 |
| Y | * paragraphs [0001], [0031] - [0073], [0092], [0102] * | 4-6, 12-14 | G06V20/52 G06V20/64 |
| A | * figures 2, 6, 6A-6F * | 7,8,15, 16 | |
| | ----- | | |
| Y | JAN-MARTIN O STEITZ ET AL: "Multi-view X-ray R-CNN", ARXIV.ORG, CORNELL UNIVERSITY LIBRARY, 201 OLIN LIBRARY CORNELL UNIVERSITY ITHACA, NY 14853, 4 October 2018 (2018-10-04), XP080929887, | 4-6, 12-14 | |
| A | * abstract * * Section 1 * * figure 2 * | 7,8,15, 16 | |
| | ----- | | |

TECHNICAL FIELDS
SEARCHED (IPC)

G06V

The present search report has been drawn up for all claims

| Place of search | Date of completion of the search | Examiner |
|---|---|---|
| The Hague | 7 April 2025 | Philips, Petra |

EPO FORM 1503 03.82 (P04C01)

**EP 4 760 646 A1**

## ANNEX TO THE EUROPEAN SEARCH REPORT
## ON EUROPEAN PATENT APPLICATION NO.

EP 24 21 9987

This annex lists the patent family members relating to the patent documents cited in the above-mentioned European search report.
The members are as contained in the European Patent Office EDP file on
The European Patent Office is in no way liable for these particulars which are merely given for the purpose of information.

07-04-2025

| Patent document cited in search report | Publication date | Patent family member(s) | Publication date |
|---|---|---|---|
| US 2021112238 A1 | 15-04-2021 | US 2021112238 A1<br>WO 2022139901 A1 | 15-04-2021<br>30-06-2022 |

EPO FORM P0459

For more details about this annex : see Official Journal of the European Patent Office, No. 12/82